# EUROPÄISCHE PATENTSCHRIFT

(11) **EP 1 604 177 B1**
(45) Veröffentlichungstag und Bekanntmachung des Hinweises auf die Patenterteilung: **07.05.2008**
(21) Anmeldenummer: 04711977.1
(22) Anmeldetag: 18.02.2004
(51) Int. Cl.: G01F 1/684

(54) **MEMBRANSENSOR**
MEMBRANE SENSOR
CAPTEUR A MEMBRANE

(30) Priorität: 11.03.2003 DE 10310859; 13.06.2003 DE 10326786; 11.12.2003 DE 10357869
(43) Veröffentlichungstag der Anmeldung: 14.12.2005
(73) Patentinhaber: ROBERT BOSCH GMBH, 70442 Stuttgart (DE)
(72) Erfinder: MUELLER-FIEDLER, Roland, 71229 Leonberg (DE); HECHT, Hans, 70825 Korntal-Muenchingen (DE); MUCHOW, Joerg, 72764 Reutlingen (DE); FUERTSCH, Matthias, 72810 Gomaringen (DE); STRATMANN, Andreas, 72810 Gomaringen (DE); WEBER, Heribert, 72622 Nuertingen (DE); BERNHARD, Winfried, 70839 Gerlingen (DE); GRUEN, Detlef, 72760 Reutlingen (DE); DUELL, Andreas, 70567 Stuttgart (DE); SCHINK, Rainer, 71229 Leonberg (DE); WAGNER, Ulrich, 70176 Stuttgart (DE); SCHELLING, Christoph, 72762 Reutlingen (DE)
(86) Internationale Anmeldenummer: PCT/DE2004/000295
(87) Internationale Veröffentlichungsnummer: WO 2004/080885

(56) Entgegenhaltungen:
- DE-A- 4 024 780
- DE-A- 19 527 861
- DE-A- 19 951 595

## Beschreibung

### Stand der Technik

Die Erfindung betrifft einen Membransensor, insbesondere einen Sensor mit direktem Medienkontakt wie z.B. einen Luftmassensensor, einen Luftdrucksensor oder einen Luftgütesensor, nach den Merkmalen des Oberbegriffs des Hauptanspruchs.

Die Herstellung solcher Membransensoren erfolgt vorzugsweise durch Abscheidung der Membranmaterialien beispielsweise aus Siliziumoxid, Siliziumnitrid, Polysilizium oder aus Metallen auf einem Silizium-Wafer und anschließende lokale nass- oder trockenchemische Ätzung des Siliziums von der Rückseite bis zur Membran. Diese Sensoren besitzen oft zur Reduzierung der Wärmeleitung ins Substrat sehr dünne Membranen.

Es ist beispielsweise aus der DE 42 15 722 A1 ein solcher Sensor bekannt, bei dem die Membran zur Verringerung der Empfindlichkeit gegenüber den auftretenden Kerbspannungen an der Membranhalterung und zur Verbesserung der Druckempfindlichkeit mit einer elastischen Einfassung versehen ist. Die elastische Einfassung ist der Seite der Membran gegenüberliegend angebracht, an der die Messelemente liegen und der damit das zu messenden Medium vorbeiströmt.

Bei diesen Sensortypen mit einem direktem Medienkontakt, wie dem eingangs erwähnten Luftmassensensor, Luftdrucksensor oder Lüftgütesensor ist die Membran mit einer Dicke im Mikrometer-Bereich und lateralen Dimensionen vom einigen 100 Mikrometern bis zu mehreren Millimetern daher direkt dem strömenden Medium, z.B. Luft, ausgesetzt. Die trotz der Verwendung von Filtern in den Medien enthaltenen Partikel, wie z.B. Staub, können daher bei höheren Strömungsgeschwindigkeiten durch den direkten Beschuss der Membran mit den Partikeln zur Beschädigung der Membran führen. Ebenso können ungünstige Druckverhältnisse dazu führen, dass die Membran eines Luftdrucksensors eine zu große Auslenkung erfährt. Es hat sich gezeigt, dass durch die aufgezeigten Fälle die Membran vorzugsweise am bruchempfindlichen Membranrand schadensanfällig ist. Die Beschädigung der Membran kann von der Beeinträchtigung der Messempfindlichkeit bis zum totalen Ausfall durch Zerstörung des Sensors reichen.

Die Stabilität der Membranen gegen Partikelbeschuss wird durch die statistische Lebensdauer in einer Luftströmung mit einer definierten Staubmenge bestimmt. Dabei ließe sich zwar eine Erhöhung der Stabilität durch Erhöhung der Membrandicke und/oder durch Absenken der Vorspannung der Membran erreichen, jedoch führt eine Erhöhung der Dicke zur Zunahme der Wärmeleitfähigkeit und damit zur Verschlechterung der Kennlinie. Die Vorspannung kann in der Regel nicht ausreichend abgesenkt werden, da die Membran unter allen Betriebsbedingungen im Zugspannungsbereich bleiben muss, um ein Aufwölben zu verhindern.

Bei Luftdrucksensoren kann die Membrandicke ebenfalls nur bis zu einem bestimmten Grad variiert werden, da eine Verdickung der Membran mit einer Verschiebung des messbaren Druckbereichs einher geht.

In der nicht vorveröffentlichten DE 102 10 335 A1 wird ein Membransensor beschrieben, dessen Membran in einer Halterung am Sensorgehäuse untergebracht ist. Neben dieser Halterung weist der Sensor auf dem Membranrand eine zusätzliche Schicht auf, mit der die Stabilität der Membran gegen auftreffende Partikel erhöht wird.

Aus der Schrift DE 199 51 595 A1 ist ein Massenflusssensor bekannt, der eine von einem Rahmen gehaltene Membran aufweist. Zur Erhöhung der mechanischen Stabilität der Membran wird wenigstens eine Anpassungsschicht aus einem Material mit einer erhöhten Wärmeleitfähigkeit in die aus Schichten bestehende Membran eingefügt.

In der Schrift DE 40 24 780 A1 wird ein Drucksensor mit einem Keramik-Sensorelement beschrieben, bei dem die Mittelzone des Sensorelements als Membran mit unterschiedlichen Dicken ausgebildet ist.

Aus der Schrift DE 195 27 861 A1 ist ein Massenflusssensor mit einer in einem Rahmen aus einkristallinem Silizium aufgespannten Membran bekannt. Zur Einstellung eines kontrollierten Wärmeflusses durch die Membran sind im Randbereich der Membran Wärmeleitelemente vorgesehen.

### Vorteile der Erfindung

Bei der vorliegenden Erfindung handelt es sich um einen mikromechanischen Sensor bzw. ein Verfahren zur Herstellung eines mikromechanischen Sensors, der wenigstens eine Membran aufweist. Die Membran wird dabei so aus einem ersten Material hergestellt, dass sie zur Sensierung eines sie umgebenden Mediums in einem zweiten Material untergebracht ist. Der Kern der Erfindung besteht nun darin, dass die Membran wenigstens teilweise durch ein drittes Material an bruchempfindlichen Stellen am Membranrand verstärkt ist. Durch die Verstärkung des Membranrands wird die Stabilität und somit auch die Lebensdauer der Membran bzw. des Sensors erhöht.

In einer besonderen Ausgestaltung der Erfindung ist zur Erhöhung der Stabilität vorgesehen, dass die Membran eine von der Entfernung zum Membranrand abhängige Membrandicke aufweist. So kann beispielsweise die Dicke der Membran zum Membranrand hin zunehmen.

Eine Weiterbildung der Erfindung sieht vor, dass die Membran aus dem ersten und dem dritten Material besteht. Während das erste Material über die gesamte Membran eine einheitliche Schichtdicke aufweist, kann das dritte Material wie in der vorstehenden Ausgestaltung beschrieben, unterschiedliche Schichtdicken in der Membran annehmen.

Um eine Erhöhung der Membranstabilität hinsichtlich der Beanspruchung während einer Messreihe zu erreichen, kann der Membranrand auf der Seite der Membran, die dem zu sensierenden Medium ausgesetzt ist, wenigstens an ausgewählten Stellen mit dem dritten Material abgedeckt werden. Werden die Membrankanten beispielsweise komplett mit einer Schicht aus einem plastischen und elastischen dritten Material bedeckt, so kann diese Schicht die Belastungen auf die Membran abpuffern, ohne eine Beschädigung der Membran zuzulassen.

Weiterhin ist durch diese Abdeckung eine punktuelle Verstärkung der Membran ohne eine großflächige Bedeckung des Membranrandes möglich.

Darüber hinaus ist vorgesehen, dass die Membran Strukturen aus dem dritten Material aufweist. Diese Strukturen sind derart ausgestaltet, dass sie über die Membran hinaus reichen, beispielsweise auf das die Membran einfassende zweite Material. Eine bevorzugte Ausgestaltung der Erfindung nutzt diese Strukturen, um Betriebsgrößen des Mediums zu erfassen und an eine Auswerteschaltung weiterzuleiten. Dies kann beispielsweise über die Messung einer Widerstandsänderung in den Strukturen in Abhängigkeit der Betriebsgrößen des Mediums erreicht werden.

Vorteilhafterweise ist das dritte Material, mit dem wenigstens ein Teil des Membranrands bedeckt ist, elektrisch leitfähig. Durch die Leitfähigkeit des dritten Materials können erfindungsgemäß die Abdeckung des Membranrandes und/oder die Strukturen als Leiterbahnen und/oder sonstige Widerstandsstrukturen verwendet werden.

Besonders vorteilhaft wird die Verlängerung der Strukturen über den Membranrand hinaus, wenn die Kanten der Strukturen senkrecht zum Membranrand erfolgen. Durch eine derartige Anordnung können Belastungen, die durch Überdruck oder durch Partikel ebenfalls senkrecht zur Membrankante wirken, optimal kompensiert werden.

Erfindungsgemäß bestehen das erste, das zweite und das dritte Material aus unterschiedlichen Substanzen. Jedoch kann vorgesehen sein, dass zwei oder auch alle drei Materialen aus der gleichen Substanz bestehen. Als Substanz wenigstens einer der drei Materialen ist in einer Fortbildung der Erfindung Silizium, Siliziumoxid, Siliziumnitrid und/oder eine dielektrische Substanz vorgesehen. In einer besonderen Ausgestaltung der Erfindung ist vorgesehen, dass das dritte Material aus Platin, Nickel und/oder Poly-Silizium besteht.

Mit dem in der Erfindung vorgeschlagenen Membransensor ist vorgesehen, als Betriebsgrößen des Mediums den Druck, die Temperatur, die Zusammensetzung, die Dichte oder die Teilchengeschwindigkeit des Mediums zu erfassen.

### Zeichnung

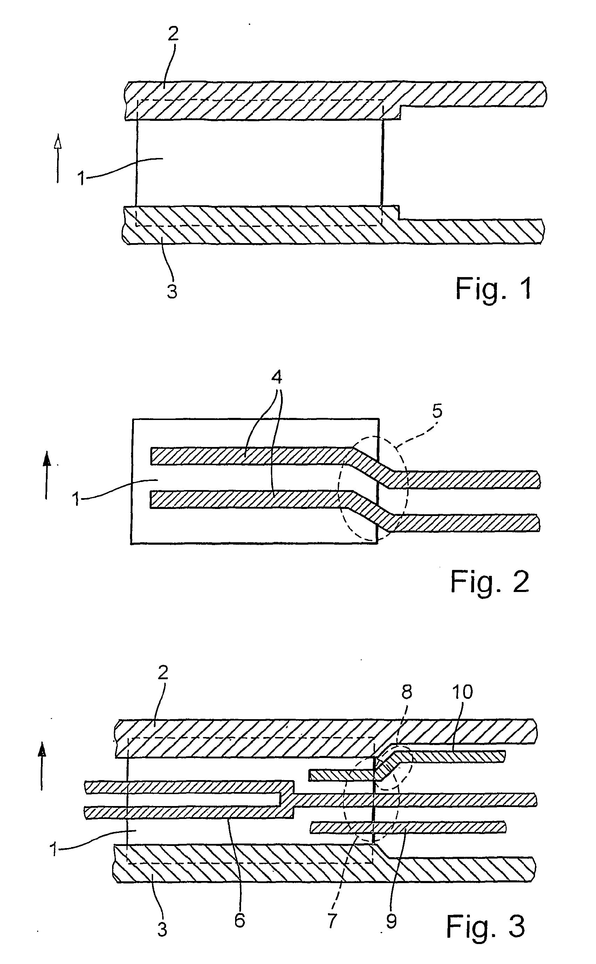

In Figur 1 ist eine Abdeckung des Membranrandes durch eine Leiterbahn dargestellt. Ein schlechtes Beispiel zur Führung der Widerstandsstrukturen auf der Membranoberfläche ist in Figur 2 dargestellt. Figur 3 zeigt eine optimierte Bedeckung der Membran mit Widerstands- bzw. Leiterbahnstrukturen.

### Beschreibung der Ausführungsbeispiele

In Untersuchungen von Membransensoren hat sich gezeigt, dass vornehmlich der Membranrand die Belastung einer Messwertaufnahme zu tragen hat, wohingegen die Membranmitte relativ unempfindlich hinsichtlich einer Zerstörung ist. Dies ist leicht verständlich, da beispielsweise bei einem Drucksensor die Bewegung der Membran zu einer Verspannung am Membranrand führt, die über die Einfassung der Membran kompensiert werden muss. Bei einem Luftmassensensor tritt ebenfalls eine Bewegung der Membran auf, die durch die an der Membran vorbeiströmenden Luft (oder ein anderes zu messendes Medium) hervorgerufen wird.

Ein möglicher Weg, die Belastung am Membranrand zu minimieren besteht darin, die Schichtdicken und die Schichtspannungen der Einzelschichten, aus denen die Membran und die sie umgebende Halterung bestehen aufeinander optimal abzustimmen. Diese Parameter können jedoch nicht beliebig variiert werden, da sie Einfluss auf die Funktionalität der Bauelemente (z.B. Heizleistung, Schichthaftung) besitzen. Aus diesem Grund wird im vorliegenden Ausführungsbeispiel nach Figur 1 das Layout der Leiterbahnen 2 und 3 an den Membranrändem so optimiert, dass die Elastizität der Membran 1 gegenüber einer statischen oder dynamischen Belastung stark erhöht wird. Diese Optimierung kann dadurch geschehen, dass die Membran 1 und ein Teil der Einfassung der Membran z.B. an zwei gegenüberliegenden Seiten mit den Leiterbahnen 2 und 3 bedeckt wird. Eine weitere Möglichkeit besteht darin, dass die Membranränder möglichst komplett mit einer Widerstands- bzw. Leiterbahnstruktur überdeckt sind. Somit kann die aus den Widerstands- bzw. Leiterbahnstrukturen gebildete plastisch und elastisch verformbare Schicht Belastungen abpuffern, ohne eine Beschädigung der Membran 1 zuzulassen.

Neben den Membranrändem sind jedoch auch die Strukturen, die auf der Oberfläche der Membran 1 angeordnet sind, Belastungen durch die Messwertaufnahme ausgesetzt. So sind Strukturen 4, 6, 9 und 10 in den Figuren 2 und 3 auf der Membranoberfläche beispielsweise als Widerstands- oder Leiterbahnstrukturen denkbar, die Messgrößen durch die Bewegung der Membran oder dem Vorbeiströmen der Luftpartikel erfassen. Die erfassten Messgrößen stellen dabei Betriebsgrößen wie beispielsweise den Druck, die Temperatur, die Zusammen-, setzung, die Dichte oder die Strömungsgeschwindigkeit des Mediums dar, dem die Membran ausgesetzt ist. Um diese Messgrößen einer Auswerteschaltung zuzuführen, ist es notwendig, eine Verbindung von den Strukturen über den Membranrand hinweg zur Auswerteschaltung herzustellen. Da diese Verbindung über den kritischen Membranrand führen, ist zu überlegen, wie dies optimal geschehen kann.

Bei Luftmassensensoren strömt die Luft (oder ein anderes zu messendes Medium) vorzugsweise in einer Richtung entlang des Sensors, wie es beispielhaft in den Figuren 1 bis 3 durch einen Pfeil angedeutet ist. Durch das Vorbeiströmen der schnellen Luftteilchen an der Membran kommt es außer zu einer Belastung der Membranränder durch die Bewegung der Membran auch zu einem Beschuss der Widerstandsstrukturen, die von der Membran zu Auswerteschaltungen führen, durch die vorbeiströmenden Partikel. Besonders bei einer Widerstandsstruktur, wie sie in Figur 2 im Bereich 5 dargestellt ist, kann eine Beschädigung der von der Membran wegführenden Strukturen bzw. Leiterbahnen nicht ausgeschlossen werden. Da die Struktur 5 jedoch den strömenden Partikeln eine große Angriffsfläche liefert, kann durch eine Minimierung dieser Angriffsfläche die Zerstörung der Strukturen vermindert werden. Ein Beispiel, wie das geschehen kann, ist im Bereich 7 der Figur 3 dargestellt. Alle Widerstandsstrukturen bzw. Leiterbahnen 6, 9 und 10 liegen senkrecht auf dem entsprechenden Membranrand. Somit wird dem Partikelstrom eine minimale Angriffsfläche entgegengebracht. Zur Weiterleitung der in den Widerstandsstrukturen erfassten Größen können nach dem Verlassen der Membran 1, wie im Bereich 8 gezeigt, die Leiterbahnen wieder abgewinkelt sein, um sie beispielsweise aus dem Bereich der Luftströmung wegzuleiten. Ein weiterer Vorteil bei der Verlegung der Leiterbahnstrukturen nach Bereich 7 besteht darin, dass Belastungen auf die Leiterbahnstrukturen, wie sie beispielsweise durch Überdruck oder eine Partikelströmung hervorgerufen werden, ebenfalls senkrecht zum Membranrand wirken.

Somit können die Belastungen optimal kompensiert werden, wohingegen bei schrägen Strukturen wie sie im Bereich 5 der Figur 2 dargestellt sind keine vollständige Kompensation möglich ist.

Im Allgemeinen beruht der Aufbau von Membransensoren mittels der Technologie der Silizium-Mikromechanik auf einer definierten Abfolge von dielektrischen Schichten (z.B. Siliziumoxid und Siliziumnitrid), optional Silizium und optional von Materialein zur Widerstandsmessung (z.B. Platin, Nickel, Poly-Silizium). Auf den so hergestellten Membranen werden dabei häufig Strukturen, beispielsweise zur Messung von Widerständen, benötigt.

## Patentansprüche

1. Mikromechanischer Sensor mit wenigstens einer Membran (1), wobei die Membran (1)
- ein erstes und ein drittes Material aufweist und
- einem sensierenden Medium ausgesetzt wird und
- wenigstens teilweise an ihrem Rand durch ein die Membran umgebendes zweites Material eingefasst ist,
wobei der Membranrand auf der dem sensierenden Medium ausgesetzten Membranseite zur Erhöhung der Stabilität wenigstens teilweise eine Abdeckung (2, 3) aus dem dritten Material aufweist, welche die Membran (1) gegenüber Belastungen durch das zu sensierende Medium verstärkt, und
wobei die Membran (1) Strukturen (6, 9, 10) zur Erfassung von Betriebsgrößen des Mediums aus dem dritten Material aufweist, wobei vorgesehen ist, dass die Strukturen (6, 9, 10) über den Membranrand hinaus verlängert sind,
**dadurch gekennzeichnet, dass**
die Abdeckung (2, 3) wenigstens einen Teil von Widerstandsstrukturen darstellt.

2. Sensor nach Anspruch 1, **dadurch gekennzeichnet, dass** die Membran (1) eine von der Entfernung zum Membranrand abhängige Membrandicke aufweist, wobei insbesondere vorgesehen ist, dass die Membrandicke zum Membranrand zunimmt.

3. Sensor nach Anspruch 1, **dadurch gekennzeichnet, dass** die Membran (1) wenigstens das erste und das dritte Material aufweist, wobei vorgesehen ist, dass das erste Material eine über die gesamte Membranfläche gleichmäßige Dicke aufweist.

4. Sensor nach Anspruch 1, **dadurch gekennzeichnet, dass** mittels der Strukturen (6, 9, 10) in Abhängigkeit von Betriebsgrößen des Mediums Widerstandsmessungen durchgeführt werden.

5. Sensor nach wenigstens einem der vorhergehenden Ansprüche, **dadurch gekennzeichnet, dass** das dritte Material leitfähig ist, wobei insbesondere vorgesehen ist, dass die Strukturen (6, 9, 10) nach Anspruch 1 wenigstens einen Teil von Leiterbahnstrukturen und/oder Widerstandsstrukturen darstellen.

6. Sensor nach Anspruch 1, **dadurch gekennzeichnet, dass** die Verlängerung der Strukturen (6, 9, 10) über den Membranrand hinaus senkrecht zu einem Membranrand erfolgt.

7. Sensor nach wenigstens einem der vorhergehenden Ansprüche, **dadurch gekennzeichnet, dass** das erste, das zweite und/oder das dritte Material aus
- Silizium, und/oder
- Siliziumoxid, und/oder
- Siliziumnitrid, und/oder
- einer dielektrischen Substanz
besteht, wobei insbesondere vorgesehen ist, dass das dritte Material aus
- Platin, und/oder
- Nickel, und/oder
- Poly-Silizium, und/oder
- einem plastisch und elastisch verformbaren Material
besteht.

8. Sensor nach Anspruch 4, **dadurch gekennzeichnet, dass** unter Betriebsgrößen des Mediums
- der Druck, und/oder
- die Temperatur, und/oder
- die Zusammensetzung, und/oder
- die Dichte, und/oder
- der Fluss, d.h. die Geschwindigkeit der vorbeiströmenden Teilchen
des Mediums verstanden werden soll.

## Claims

1. Micromechanical sensor having at least one membrane (1), wherein the membrane (1)
- has a first and a third material and
- is exposed to a sensing medium, and
- is at least partially enclosed at its edge by a second material surrounding the membrane,
wherein the membrane edge, on the membrane side that is exposed to the sensing medium, in order to increase the stability, at least in part has a covering (2, 3) of the third material, which reinforces the membrane (1) with respect to loads presented by the medium that is to be sensed, and
wherein the membrane (1) has structures (6, 9, 10) for recording operating variables of the medium made of the third material, wherein it is provided that the structures (6, 9, 10) are extended beyond the membrane edge,
**characterized in that**
the covering (2, 3) forms at least a part of resistance structures.

2. Sensor according to Claim 1, **characterized in that** the membrane (1) has a thickness that is dependent on the distance from the membrane edge, wherein it is provided in particular that the membrane thickness increases towards the membrane edge.

3. Sensor according to Claim 1, **characterized in that** the membrane (1) includes at least the first and the third material, wherein it is provided that the first material has a thickness that is uniform over the entire membrane area.

4. Sensor according to Claim 1, **characterized in that** resistance measurements are carried out by means of the structures (6, 9, 10) as a function of operating variables of the medium.

5. Sensor according to at least one of the preceding claims, **characterized in that** the third material is conductive, wherein it is provided in particular that the structures (6, 9, 10) in accordance with Claim 1 form at least a part of conductor track structures and/or resistance structures.

6. Sensor according to Claim 1, **characterized in that** the extension of the structures (6, 9, 10) beyond the membrane edge takes place perpendicular to a membrane edge.

7. Sensor according to at least one of the preceding claims, **characterized in that** the first, the second and/or the third material consists of
- silicon, and/or
- silicon oxide, and/or
- silicon nitride, and/or
- a dielectric substance
wherein it is provided in particular that the third material consists of
- platinum, and/or
- nickel, and/or
- polysilicon and/or
- a plastically and elastically deformable material.

8. Sensor according to Claim 4, **characterized in that** operating variables of the medium are to be understood as meaning
- the pressure, and/or
- the temperature, and/or
- the composition, and/or
- the density, and/or
- the flow, i.e. the velocity of the particles flowing past
of the medium.

## Revendications

1. Capteur micromécanique doté d'au moins une membrane (1), dans lequel la membrane (1) :
- présente au moins un premier et un troisième matériau,
- est exposée à un milieu sensibilisant, et
- a son bord au moins partiellement enveloppé par un deuxième matériau entourant la membrane,
pour augmenter la sensibilité, le bord de la membrane du côté de la membrane exposé au milieu sensibilisant, présente au moins partiellement un revêtement (2, 3) en un troisième matériau renforçant la membrane (1) vis-à-vis des contraintes dues au milieu sensibilisant,
la membrane (1) présentant des structures (6, 9, 10) pour détecter des grandeurs de fonctionnement du milieu, à partir du troisième matériau, et les structures (6, 9, 10) sont prolongées au-delà du bord de la membrane,
**caractérisé en ce que**
le revêtement (2, 3) représente au moins une partie des structures de résistance.

2. Capteur selon la revendication 1,
**caractérisé en ce que**
la membrane (1) présente une épaisseur de membrane dépendant de l'éloignement au bord de la membrane, et notamment l'épaisseur de la membrane diminue en direction du bord de la membrane.

3. Capteur selon la revendication 1,
**caractérisé en ce que**
la membrane (1) présente au moins le premier et le troisième matériau, le premier matériau présentant une épaisseur homogène sur toute la surface de la membrane.

4. Capteur selon la revendication 1,
**caractérisé en ce que**
des mesures de résistance sont réalisées à l'aide des structures (6, 9, 10) en fonction des grandeurs de fonctionnement du milieu.

5. Capteur selon au moins l'une quelconque des revendications précédentes,
**caractérisé en ce que**
le troisième matériau est conducteur, et notamment les structures (6, 9, 10) selon la revendication 1 représentent au moins une partie des structures de la piste de circuit imprimé et/ou des structures de résistance.

6. Capteur selon la revendication 1,
**caractérisé en ce que**
le prolongement des structures (6, 9, 10) se produit à la verticale d'un bord de membrane au-delà du bord de la membrane.

7. Capteur selon au moins l'une quelconque des revendications précédentes,
**caractérisé en ce que**
le premier, le deuxième et/ou le troisième matériau sont en :
- silicium et/ou
- oxyde de silicium et/ ou
- nitrure de silicium et/ ou
- une substance diélectrique
et notamment le troisième matériau est en
- platine et/ ou
- nickel et/ou
- silicium polycristallin et/ou
- un matériau déformable élastiquement et plastiquement

8. Capteur selon la revendication 4,
**caractérisé en ce que**
les grandeurs de fonctionnement du milieu sont :
- la pression et/ou
- la température et/ ou
- la composition et/ ou
- l'épaisseur et/ou
- le débit, par exemple la vitesse des particules du milieu en écoulement.
